# EUROPÄISCHE PATENTSCHRIFT

(11) **EP 2 454 730 B1**
(45) Veröffentlichungstag und Bekanntmachung des Hinweises auf die Patenterteilung: **21.08.2013**
(21) Anmeldenummer: 10732952.6
(22) Anmeldetag: 13.07.2010
(51) Int. Cl.: G09F 9/30, F16M 9/00

(54) **INNENAUSBAU FÜR GESCHÄFTSRÄUME**
INTERIOR FITTING FOR BUSINESS PREMISES
AGENCEMENT INTÉRIEUR POUR LOCAUX COMMERCIAUX

(30) Priorität: 13.07.2009 DE 102009033155; 13.08.2009 DE 102009037473
(43) Veröffentlichungstag der Anmeldung: 23.05.2012
(73) Patentinhaber: Apple Inc., Cupertino, CA 95014 (US)
(72) Erfinder: POLENZ, Jürgen, 59348 Lüdinghausen (DE)
(74) Vertreter: Lang, Johannes
(86) Internationale Anmeldenummer: PCT/EP2010/060047
(87) Internationale Veröffentlichungsnummer: WO 2011/006887

(56) Entgegenhaltungen:
- DE-A1- 4 330 765
- JP-A- 11 085 047
- US-A- 6 024 330

## Beschreibung

Die Erfindung betrifft einen Innenausbau für Geschäftsräume, mit einem aus einer Unterkonstruktion und einer Oberkonstruktion gebildeten Tragwerk und einer Wandverkleidung.

Insbesondere Geschäftsräume von Multimedia-, Telekommunikations- oder IT-Unternehmen zeichnen sich durch zeitgemäßes Design aus. Speziellen Anforderungen müssen Wandverkleidungen in solchen Geschäften standhalten, als dort häufig Monitore, Displays oder andere elektronische Einrichtungen in die Wandverkleidung zu integrieren sind. Es gilt, eine Menge Elektronik wie Leitungen etc. hinter diesen Wandverkleidungen zu verbergen. Gleiches gilt für ein sehr stabiles Tragwerk für diese Verkleidung mit diversen Vor- und Rücksprüngen, Einbauten, Fächern etc. Dabei sind die Anforderungen an die Statik des Tragwerks selbstverständlich hoch. Ähnliches gilt für die Exaktheit dieser Verkleidungen. Übergänge, Anschlüsse von Verkleidungspaneelen untereinander und im Bereich von Boden und Decke, Winkel, Ecken, Fugen etc. müssen in ihrer Exaktheit höchsten Ansprüchen genügen. Entsprechend aufwendig sind bisher bekannte Lösungen, bei denen die Tragwerke vor Ort hergestellt werden. Der damit verbundene handwerkliche Aufwand und die Verantwortung der Handwerker vor Ort sind sehr hoch. Entsprechend verheerend machen sich Fehler bemerkbar, insbesondere Folgefehler, etwa bei ungenauer Einmessung. Ist zum Beispiel die Unterkonstruktion nicht in ausreichender Qualität gefertigt, macht sich dies häufig erst bei Her- bzw. Fertigstellung der Oberkonstruktion bemerkbar.

JP 11 085047 A offenbart eine Informationsanzeigevorrichtung mit einer Wandverkleidung und einem Tragwerk aus einem Oberteil und einem Unterteil.

DE 43 30 765 A1 offenbart eine Konstruktion zur Befestigung eines Gestellteils an einem Rammpfahl, wobei die Konstruktion am Kopf des Rammpfahls anzubringende Befestigungsmittel und zwischen den Befestigungsmitteln und dem Gestellteil anzubringende und damit zusammenwirkende Verbindungsmittel umfasst.

Damit stellt sich der vorliegenden Erfindung die Aufgabe, einen Innenausbau für Geschäftsräume zu schaffen, der bei möglichst geringem handwerklichen Aufwand vor Ort das Herstellen eines stabilen Tragwerks und einer exakt angepassten Verkleidung ermöglicht.

Diese Aufgabe wird durch folgenden Aufbau für einen Innenausbau gelöst:

Eine Unterkonstruktion, bestehend aus einer Verankerung in dem Betonboden, eine auf dem Betonboden positionierte, Maßvorgaben für die Oberkonstruktion aufweisende Schablone, eine beabstandet zu der Schablone angeordnete Bodenplatte und ein auf der Bodenplatte fixiertes Winkelprofil zum Anschluss der Oberkonstruktion.

Bei der Montage des Innenausbaus wird dabei zunächst eine Unterkonstruktion vor Ort hergestellt. Diese besteht aus Verankerungen im Boden, Schablonen, Bodenplatten und Winkelprofilen. Hieran schließen sich Bauelemente einer Oberkonstruktion an, die weitgehend standardisiert sind. Über diverse Maßnahmen wird die Unterkonstruktion dabei besonders präzise im Hinblick auf die örtlichen Gegebenheiten angepasst. Eine hohe Maßgenauigkeit wird dabei erreicht, indem Unter- und Oberkonstruktion des Tragwerks standardisiert aufeinander abgestimmt sind. Durch Festlegung eines Minimums von Bezugspunkten vor Ort sind Mess- und andere Fehler weitgehend ausgeschlossen. Auch die Knotenpunkte sind vorgegeben und müssen nicht mehr vor Ort eingemessen bzw. festgelegt werden.

Ein wichtiger Bestandteil der Unterkonstruktion ist dabei die Schablone. Die Schablone wird, vergleichbar einer verlorenen Schalung, auf den Rohfußboden aufgelegt und dort fixiert. Sie dient damit als exakte Maßvorgabe für sämtliche später zu installierenden Bauelemente. Insbesondere liefert die Schablone die Bezugspunkte für die vertikale Ausrichtung der weiteren Bauelemente. Hierzu ist vorgesehen, dass die Schablone Öffnungen aufweist, welche vertikalen Bezugspunkten für die Oberkonstruktion entsprechen.

Dabei ist daran gedacht, dass die Schablone aus Feinblech, vorzugsweise aus einem ca. 1 mm starken Feinblech hergestellt ist. Die Öffnungen sind per Laser gefertigt, um hier besondere Präzision zu ermöglichen.

Weiterer Bestandteil der Unterkonstruktion ist eine Bodenplatte, wobei die Bodenplatte zur Vorjustierung der Oberkonstruktion und damit zur groben Höhenjustierung für die vertikalen Baugruppen dient. Auch diese ist zweckmäßigerweise gelasert. Die Bodenplatte steht auf einer Art Ständerwerk und ist beabstandet zum Betonboden positioniert.

An die Bodenplatte schließen sich Winkelprofile unterschiedlichster Ausbildung an, die formmäßig auf die Ausbildung der Oberkonstruktion abgestimmt sind. Vorgeschlagen wird dabei insbesondere, dass das Winkelprofil einen C-förmigen Querschnitt aufweist und damit eine Vielzahl von Anschlussmöglichkeiten für die vertikalen Baugruppen bildet.

Es wurde bereits darauf hingewiesen, dass es ein Vorteil der vorliegenden Erfindung ist, dass das Tragwerk modulartig ausgebildet ist. Vor Ort wird bei der Herstellung des Innenausbaus zunächst eine Verankerung im Rohfußboden durchgeführt, anschließend werden Schablonen, Bodenplatten und Winkelprofile installiert, wobei eine Ausrichtung auf die Gegebenheiten vor Ort erfolgt. Die beschriebenen Installationsarbeiten orientieren sich an einem vorgegebenen Nullniveau, die komplette Unterkonstruktion wird daran ausgerichtet. Dies macht es dann möglich, dass die Oberkonstruktion durch mindestens eine standardisierte Baugruppe gebildet ist. Weil damit wesentliche Bestandteile der vertikalen, eigentlichen Wandverkleidung inklusive sämtlicher Verbindungspunkte standardisiert sind, ist die Fehleranfälligkeit bei der Montage dieser vertikalen Baugruppen deutlich reduziert.

Eine weitere Ausführungsform der Erfindung sieht vor, dass an der Oberkonstruktion Haltewinkel zur Fixierung der Wandverkleidung vorgesehen sind. Letztere besteht aus Panelen, welche direkt oder indirekt über Fixierungsmittel an den Haltewinkeln der Oberkonstruktion befestigt werden können.

Eine weitere Maßnahme sieht vor, dass zwischen den Haltewinkeln und den die Wandverkleidung bildenden Paneelen Justiervorrichtungen vorgesehen sind. Besonderes Augenmerk im Zusammenhang mit der vorliegenden Erfindung gilt dabei den Paneelen, auf deren exakte Ausrichtung es in besonderer Weise ankommt. Um etwaige Toleranzen ausgleichen zu können, sollten sich diese bei der Fertigung des Innenausbaus ergeben, dienen die Justiervorrichtungen. Damit kann nach der Herstellung, ggf. auch später noch, eine Neuausrichtung der Paneele zueinander erfolgen.

Dies ist in besonders vorteilhafter Weise der Fall, wenn die Justiervorrichtungen durch Schraubbolzen gebildet sind, welche zwischen den Haltewinkeln und den Paneelen positioniert sind. Genauer gesagt, befinden sich die Justiervorrichtungen zwischen den Haltewinkeln und den Winkelplatten, welche zur Befestigung der Paneele dienen. Vorzugsweise zwei Schraubbolzen durchdringen parallel, insbesondere waagerecht angeordnete Winkelplatten bzw. stützen sich auf diesen ab. Zweckmäßigerweise sind die Schraubbolzen an den Außenseiten dieser Winkelplatten angeordnet. Die Schraubbolzen stützen sich auf den unteren Winkelplatten auf, sodass bei entsprechendem Drehen der Bolzen durch Druck auf diese Winkelplatten eine Nachjustierung der Winkelplatten bzw. der von diesen getragenen Paneelen möglich ist.

Es wurde bereits darauf hingewiesen, dass nach einer einmaligen Ausrichtung des kompletten Systems über die Unterkonstruktion quasi die gesamte Oberkonstruktion mit vorgegeben ist. Die Gefahr handwerklicher Fehler auf der Baustelle reduziert sich damit erheblich. Hierzu trägt bei, dass die Oberkonstruktion aus ihrem Profil herausstehende Nasen aufweist, welche als Auflager für den Anschluss anderer Bauelemente dienen.

Vorteilhafterweise können diese als Auflager dienenden Nasen bereits werkseitig und dadurch mit hoher Präzision hergestellt werden. Nach Einbau der Oberkonstruktion bzw. der Baugruppen sind die entsprechenden Auflager bereits festgelegt und in das System integriert. Dabei ist unter anderem daran gedacht, dass die Nasen aus dem Profil der Oberkonstruktion herausgelasert und damit besonders präzise festgelegt sind.

In diese Richtung geht auch der Vorschlag, wonach die Oberkonstruktion mindestens einen Meterriss aufweist, auf den der Innenausbau abgestimmt wird. Im Rahmen der Vermessung der Gebäude sind diese Meterrisse festgelegt, der erfindungsgemäße Innenausbau passt sich dem nun auf besonders geeignete Weise an, indem der Innenausbau, sprich die Meterrisse, auf diese eingemessenen Punkte hin abgestimmt und eingebaut wird.

In mehrerlei Hinsicht kann mit dem erfindungsgemäßen Innenausbau auch Gewerke übergreifend gearbeitet werden. Der Innenausbau gibt dabei die Bezugspunkte für weitere Gewerke vor. Besonders vorteilhaft ist dies etwa bei der Deckenverkleidung. Hierzu wird vorgeschlagen, dass die Oberkonstruktion an ihrem oberen Ende parallel zum Boden verlaufende Anschlüsse für die Deckenverkleidung aufweist. Diese Anschlüsse bestehen in Querstegen, die entsprechend beabstandet zueinander parallel zur Decke verlaufend angeordnet sind. Sie können als Anschlüsse für die Tragkonstruktion einer abgehängten Decke oder auch als Anschlüsse für Deckenplatten direkt dienen, wenn es beispielsweise gilt, den Raum hinter Fugen der eigentlichen abgehängten Decke auszukleiden.

Ein weiterer Gewerke übergreifender Vorschlag sieht vor, dass die Oberkonstruktion an ihrem unteren Ende mindestens einen Absatz aufweist, der als Bezug für den Estrich dient. Der Absatz erstreckt sich ebenfalls in Querrichtung zu dem eigentlichen Innenausbau und ist exakt in der Höhe angeordnet, die dem späteren Niveau des Estrichs entspricht. Beim Herstellen des Estrichs kann somit die Oberkante dieses Absatzes als Bezugspunkt genommen werden, d. h. das Niveau des Estrichs entspricht der Oberkante des Absatzes, so dass auch diesbezüglich eine Anpassung möglich ist.

Ein weiterer Vorschlag in diese Richtung sieht vor, dass die Oberkonstruktion an ihrem unteren Ende mindestens eine Markierung aufweist, die als Bezug für den Bodenbelag dient. Die Oberkonstruktion weist also zugleich wenigstens eine Markierung auf, die später dem oberen Abschluss des Bodenbelages entspricht, abgestimmt auf dessen Material und Stärke.

Was den eigentlichen Aufbau der Oberkonstruktion in den verschiedenen Ausbauvarianten betrifft, so ist grundsätzlich festzuhalten, dass die Oberkonstruktion des Tragwerks durch eine Vielzahl miteinander verbundener, horizontal angeordneter Streben und vertikal angeordneter Streben gebildet ist. Vorteilhafterweise sind diese Streben nebst ihren Knotenpunkten ebenfalls werkseitig so vorgegeben, dass sich die Arbeiten vor Ort auf der Baustelle auf das reine Zusammenfügen des modulartig aufgebauten Tragwerks beschränken. Konkret bezieht sich dies auf den Zusammenbau der Streben mit Einbringen der Verbindungsmittel. Das Herstellen von Bohrungen, Ausnehmungen und Auflagern wird ebenfalls bereits werkseitig vorgenommen.

Weitergehend ist vorgesehen, dass die horizontal angeordneten Streben und die vertikal angeordneten Streben formschlüssig miteinander verbunden sind. Eine Absicherung dieser formschlüssigen Verbindungen durch Befestigungsmittel wie Muttern und Schrauben ist damit nur noch zusätzlich zur Sicherung notwendig, die eigentlichen Knotenpunkte sind vorgegeben. Insbesondere wird es damit auch vermieden, dass auf der Baustelle geschweißt werden muss, was erfahrungsgemäß immer wieder dazu führt, dass sich einzelne Bauelemente verziehen, was sich dann letztlich in Form eines unpräzisen Innenausbaus bemerkbar macht.

Diesbezüglich ist unter anderem daran gedacht, dass die horizontal angeordneten Streben und die vertikal angeordneten Streben zueinander korrespondierende Ausnehmungen aufweisen, sodass die Profile an einander zugewandten Stellen werkseitig mit solchen Ausnehmungen, etwa in Form von Schlitzen, ausgestattet werden können. Auf der Baustelle selbst müssen diese Profile dann nur in Art einer Steckverbindung noch ineinander gesetzt und zweckmäßigerweise durch Befestigungsmittel abgesichert werden.

Diese Art von Steckverbindung an den Knotenpunkten zwischen den Streben kann noch verbessert werden, wenn die Verbindung zwischen horizontal angeordneten Streben und vertikal angeordneten Streben mit einer Sicherung versehen ist. Diese verhindert dauerhaft und auch bei möglicher dynamischer Belastung ein Lösen der Steckverbindung.

Zweckmäßigerweise ist vorgesehen, dass die Sicherung durch eine Öffnung in einer Strebe und eine an der benachbarten Strebe korrespondierend zu der Öffnung ausgebildete Verklinkung gebildet ist. Letztere sichert die Steckverbindung zwischen den Streben ab. Hierzu weisen die Streben schlitzartige Öffnungen auf, zu denen eine an der benachbarten Strebe vorgesehene längliche Verklinkung korrespondierend ausgebildet ist. Beim Ineinandersetzen der Profile durchdringt die Verklinkung die Öffnung im benachbarten Profil und kann dann durch eine Drehbewegung so fixiert werden, dass nunmehr eine Klemmverbindung zwischen den zu verbindenden Streben realisiert ist.

Eine weitere Ausführungsform der Erfindung sieht vor, dass die Winkelprofile und die Streben durch Anschlusslaschen miteinander verbunden sind, welche fixe Auflagerpunkte für die Streben aufweisen. Auch hier wird die modulartige Zusammensetzung des Tragwerks erfolgreich umgesetzt. Winkelprofile, Streben und Anschlusslaschen geben vor, wo die Knotenpunkte bzw. die Verbindungspunkte für die Befestigungsmittel sind. Die Befestigung erfolgt rein mechanisch, insbesondere muss bei Herstellung vor Ort nicht geschweißt werden.

Ergänzend hierzu ist vorgesehen, dass die Anschlusslaschen mit einem Mechanismus zur Feinjustierung ausgerüstet sind. Dieser ist gebildet durch eine Art Anschlusslasche mit zusätzlichen Schrauben, über deren Anziehen die Feinjustierung erfolgt.

Außerdem ist vorgesehen, dass Verbindungspunkte um Bohrungen herum Materialschwächungen aufweisen. Letztere sind durch versetzt zueinander positionierte Schlitze gebildet. Hierdurch ist eine Art Perforation verwirklicht, die insbesondere schief sitzende Befestigungsmittel dahingehend ausgleicht, dass bei entsprechendem Nachgeben der geschwächten Bereiche eine Anpassung erfolgen kann.

Die Erfindung betrifft außerdem ein Verfahren zur Installation eines Innenausbaus für Geschäftsräume, mit einem aus einer Unterkonstruktion und einer Oberkonstruktion gebildeten Tragwerk und einer Wandverkleidung, wobei zunächst eine Unterkonstruktion hergestellt wird, bestehend aus einer Verankerung in dem Betonboden, einer auf dem Betonboden positionierten, Maßvorgaben für die Oberkonstruktion aufweisenden Schablone, einer beabstandet zu der Schablone angeordneten Bodenplatte und einem auf der Bodenplatte fixierten Winkelprofil, über das anschließend die Oberkonstruktion angeschlossen wird.

Die Erfindung zeichnet sich insbesondere dadurch aus, dass ein Innenausbau für Geschäftsräume mit einem durch eine Unter- und eine Oberkonstruktion gebildeten Tragwerk und eine Wandverkleidung in Modulbauweise geschaffen ist, die einen fehlerunanfälligen Einbau mit extrem hoher Präzision ermöglicht. Hierzu erfolgt zunächst der Einbau der Unterkonstruktion mit einer Verankerung von Fixierankern im Rohbeton des Bodens. Auf diesen Rohfußboden wird eine Schablone aufgelegt. Diese weist Öffnungen mit vertikalen Bezugspunkten für die Oberkonstruktion auf. Dank dieser Schablone sind also letztlich sämtliche Referenzpunkte für die Oberkonstruktion durch das Ausnutzen moderner Lasertechnik vorgegeben. Es schließt sich eine Bodenplatte zur Vorjustierung der Oberkonstruktion an, auf der ihrerseits ein Winkelprofil mit vorzugsweise C-förmigem Querschnitt befestigt ist. Letzteres dient zum Anschluss der standardisierten Baugruppen. Von großer Bedeutung ist dabei, dass das Tragwerk eine Vielzahl von Referenzpunkten enthält. Dies sind beispielsweise Meterrisse, Absätze oder Markierungen für die Herstellung des Bodens oder der Decke. Knotenpunkte sind werkseitig vorgegeben, einzelne Befestigungsmittel müssen auf der Baustelle nicht mehr eingelesen werden. Verbindungen werden über Formschluss und Steckverbindungen bewältigt, Befestigungsmittel wie Schrauben dienen allenfalls zur Absicherung. Schweißarbeiten mit den damit verbundenen Nachteilen durch das Verziehen des Metalls entfallen völlig.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Tragwerk mit Verkleidung in Vorderansicht,
- Figur 2: ein Tragwerk mit Verkleidung in Rückansicht,
- Figur 3: eine Unterkonstruktion des Tragwerks,
- Figur 4: ein Detail zur Figur 3,
- Figur 5: zwei Schnitte durch die Darstellung gemäß Figur 4,
- Figur 6: eine Schablone,
- Figur 7: einen Knotenpunkt,
- Figur 8: zwei Profile vor dem Ineinandersetzen,
- Figur 9: ein Profil,
- Figur 10: eine Baugruppe,
- Figur 11: eine Baugruppe,
- Figur 12: ein C-Profil,
- Figur 13: einen Verbindungspunkt mit Materialschwächung,
- Figur 14: ein Profil,
- Figur 15: ein Profil,
- Figur 16: in Anschluss des Tragwerks an die Decke,
- Figur 17: eine Justiervorrichtung für ein Paneek,
- Figur 18: einen Knotenpunkt mit Sicherung
- Figur 19: eine Unterkonstruktion des Tragwerks, und
- Figur 20: eine Baugruppe.

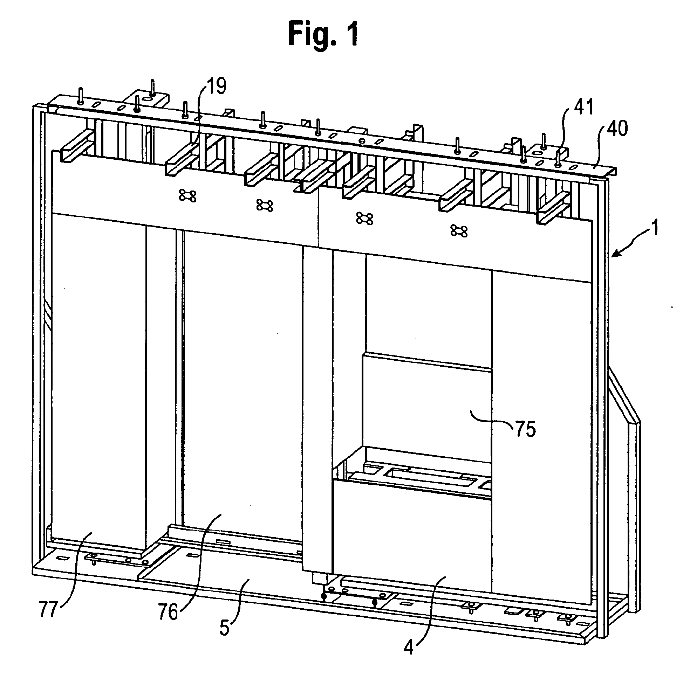

Figur 1 zeigt den erfindungsgemäßen Innenausbau. Dieser besteht aus einer Wandverkleidung 4 mit einem Tragwerk 1 und ist insbesondere für den Einsatz in Geschäftsräumen gedacht. Vor allem ist der Innenausbau für Geschäftsräume für Multimedia-Präsentationen u. ä. geeignet. Die Wandverkleidung weist daher diverse Rücksprünge 75, 76 an ihrer Front 77 auf, die zur Aufnahme von Bildschirmen z. B. besonders gut geeignet sind.

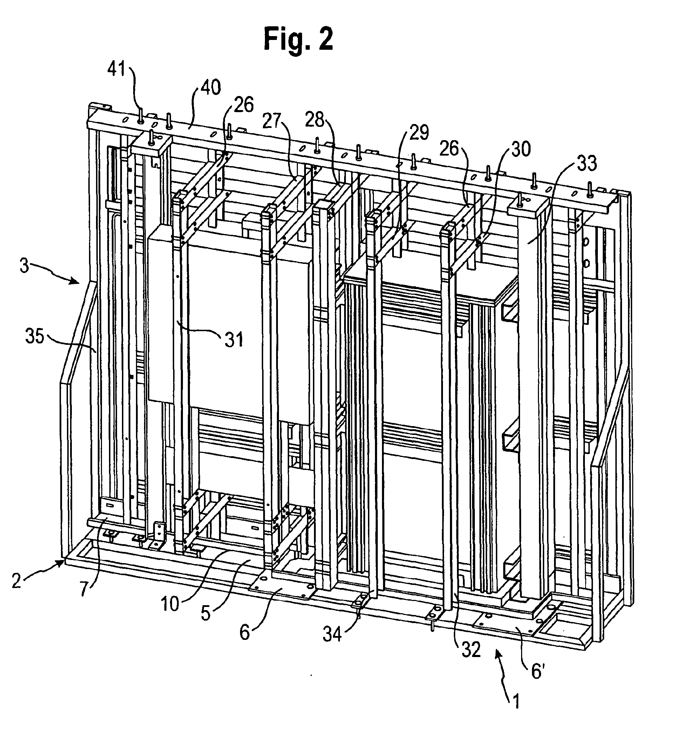

In Rückansicht wird das Tragwerk 1 in Figur 2 dargestellt. Das Tragwerk 1 umfasst zunächst eine vor Ort hergestellte Unterkonstruktion 2. Diese besteht aus einer hier nicht erkennbaren Verankerung in dem Beton- oder sonstigen Rohboden, einer oder mehrerer Schablonen 5, einer oder mehrerer beabstandet zu dieser Schablone 5 angeordneten Bodenplatten 6 und einem oder mehreren auf der Bodenplatte 6 fixierten Winkelprofilen 7. Diese vor Ort hergestellte Unterkonstruktion 2 wird ausgerichtet auf bei der vorherigen Vermessung des Geschäftsraumes ermittelte Messpunkte. Anschließend erfolgt die Montage der Oberkonstruktion 3 mit weitgehend standardisierten Baugruppen. Hierzu werden zunächst senkrechte Streben, von denen hier fünf Streben beispielhaft mit den Bezugszeichen 31, 32, 33, 34 und 35 versehen sind, mit den Winkelprofilen 7 verbunden. Horizontale Streben sind beispielhaft mit 26, 27, 28, 29 und 30 bezeichnet. Im Rahmen der Fertigstellung der Oberkonstruktion 3 erfolgt dann über die Dübel, von denen hier einer beispielhaft mit dem Bezugszeichen 41 versehen ist und die Deckelleiste 40 der Anschluss an die in Figur 2 nicht dargestellte Decke.

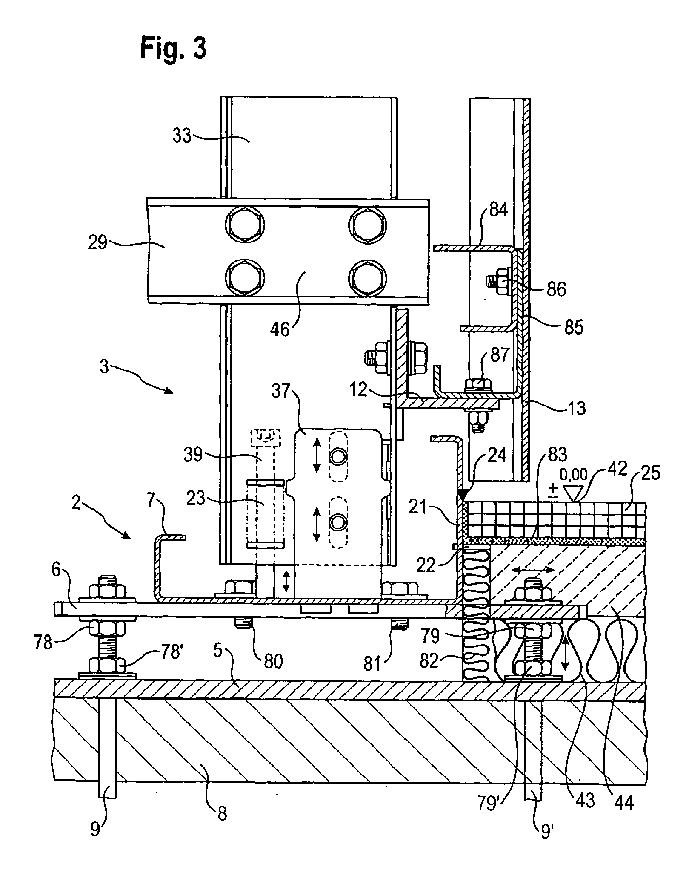

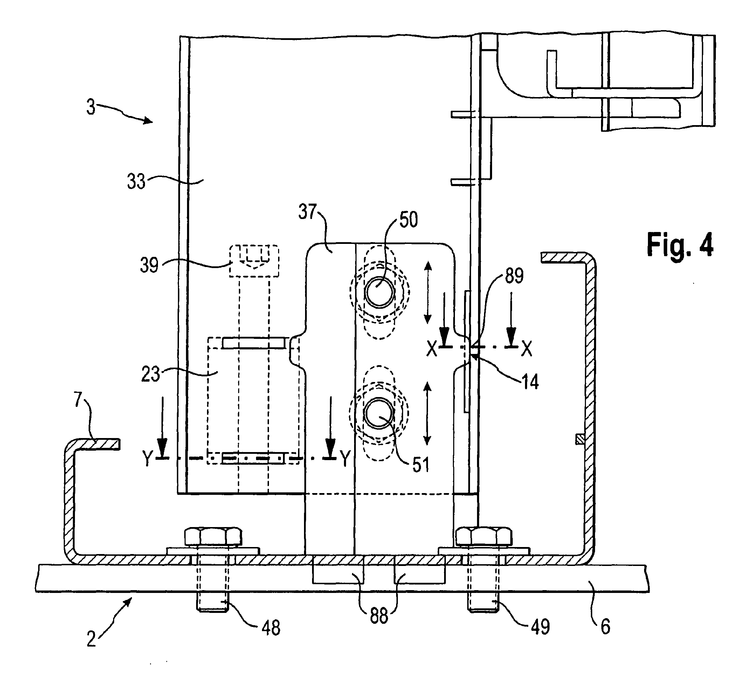

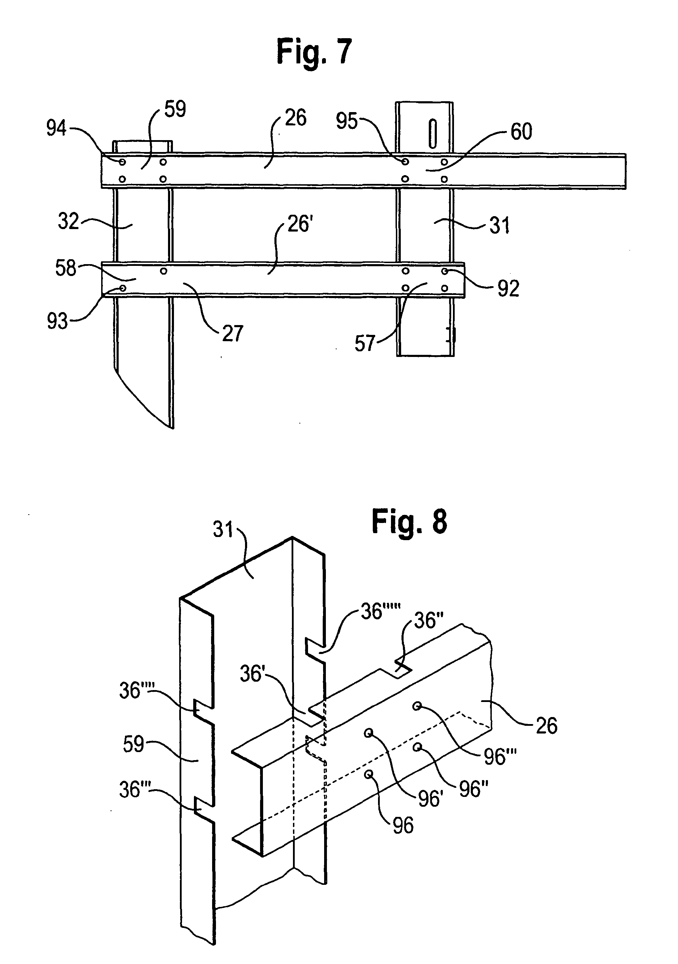

Figur 3 stellt die Unterkonstruktion 2 und den daran angeschlossenen, unteren Teil der Oberkonstruktion 3 detaillierter dar. Zunächst werden Anker 9, 9' im Rohfußboden 8 verankert. Auf diesen Betonboden 8 wird die Schablone 5 aufgelegt und über geeignete Befestigungsmittel fixiert. Anschließend werden die Verankerungen 9, 9' noch zur Installation der Bodenplatte 6 in einer Art Ständerwerk benutzt. Diese dient zur Vorjustierung der Oberkonstruktion 3 und wird mittels Befestigungsmitteln 78, 79, 78', 79' fixiert. Die Bodenplatte 6 wird dann mit dem Winkelprofil 7 durch die Befestigungsmittel 80, 81 verbunden. Neben der Trittschalldämmung 43 ist der Dämmstreifen 82 zu erkennen, zudem der schwimmende Estrich 44. Dessen oberer Abschluss ist orientiert an dem dem Winkelprofil 7 zugeordneten Absatz 22 im Bereich des unteren Endes 21 der Oberkonstruktion 3. Dieser Absatz 22 dient als Bezug für den Estrich 44 dahingehend, dass Gewerke übergreifend das Niveau des Estrichs 44 durch das Tragwerk 1, genauer gesagt den in die Oberkonstruktion integrierten Absatz 22 vorgegeben wird. Auf dem schwimmenden Estrich 44 ist die Kleber-/Mörtelschicht 83 und zudem der Fußbodenbelag 25, beispielsweise ein Stein- oder Fliesenfußboden zu erkennen. Symbolisiert ist hier auch die Markierung 24 an dem Winkelprofil 7, die das mit dem Bezugszeichen 42 bezeichnete Nullniveau für den Fußbodenbelag 25 bezeichnet. Anschließend wird die Verbindung zwischen der vor Ort eingemessenen und den örtlichen Bedingungen angepassten Unterkonstruktion 2 und der weitgehend standardisierten, auf der Unterkonstruktion 2 und ihrer Einmessung basierenden Oberkonstruktion 3 hergestellt. Erkennbar ist dabei die spangenartige Anschlusslasche 37 nebst Vorrichtung zur Nachjustierung 23. Auf die Details wird in Figur 4 eingegangen. Die Oberkonstruktion 3 weist zusätzlich Haltewinkel 12 zur direkten oder indirekten Aufnahme der die Wandverkleidung 4 bildenden Paneele 13 auf. Das Paneel 13 ist über Winkelplatten 84, 85 mit dem Haltewinkel 12 verbunden. Eine Fixierung erfolgt über die Befestigungsmittel 86, 87. Ein Knotenpunkt 46 zwischen einer vertikalen Strebe 33 und einer horizontalen Strebe 29 ist ferner erkennbar. Auf diese Details wird in den Figuren 7 und 8 eingegangen.

Detaillierter zeigt Figur 4 die Verbindung zwischen Unterkonstruktion 2 und Oberkonstruktion 3, genauer gesagt zwischen Winkelprofil 7 und der Strebe 33 über die Anschlusslasche 37. Fixiert über die Schrauben 50, 51, weist diese Anschlusslasche 37 den Fixpunkt 89 für die standardisierte Baugruppe auf. Über eine Steckverbindung 88 wird diese Anschlusslasche 37 mit dem über die Schrauben 48, 49 fixierten Winkelprofil 7 verbunden und dann über die Schrauben 50, 51 fixiert. Über die Justiervorrichtung 23 bzw. die Stellschraube 39 erfolgt anschließend eine Feinjustierung. Mit 89 ist der Fixpunkt für den Haltewinkel bezeichnet, der durch ein ausgelasertes, nasenartiges Flachprofil gebildet ist.

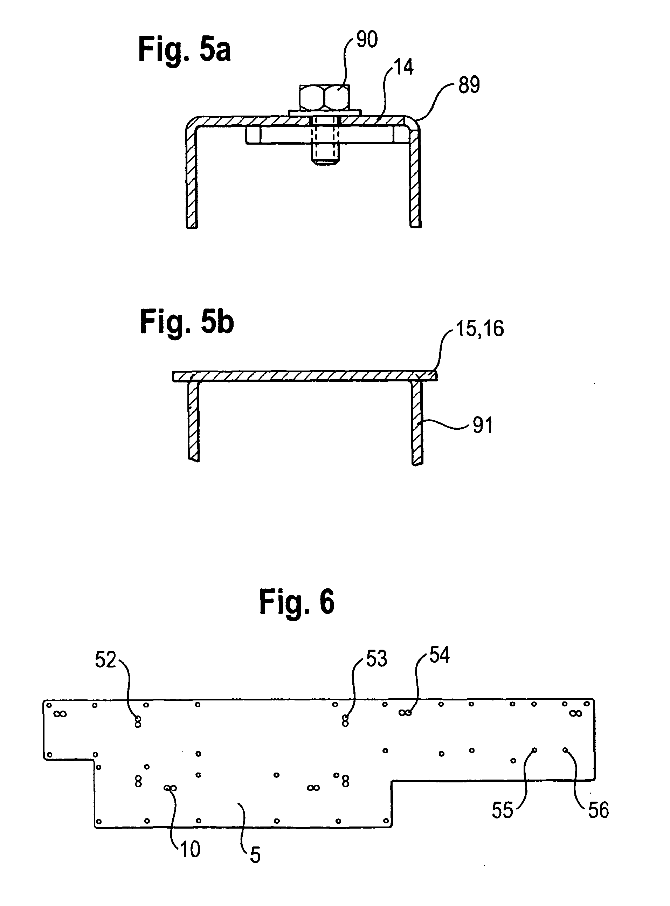

Figur 5a zeigt einen Schnitt entlang der Linie X-X aus Figur 4 in Höhe des dort mit dem Bezugszeichen 89 versehenen Fixpunktes für die Installation der standardisierten Baugruppe. Erkennbar ist das Profil 14 mit dem Fixpunkt 89 und dem Befestigungsmittel 90. Weil dieser Fixpunkt 89 vorgegeben ist, sind hier wiederum Ungenauigkeiten bei der Installation der Oberkonstruktion praktisch ausgeschlossen. Ähnliches gilt für das in Figur 5b dargestellte Profil, einem Schnitt entlang der Linie Y-Y aus Figur 4 mit dem Fixpunkt durch das ausgelaserte Flachprofil 91 in Form der Nase 15, die als Auflager 16 für weitere Bauteile dient.

Eine Schablone 5 ist Gegenstand von Figur 6. Erkennbar sind unzählige Öffnungen/Bohrungen, von denen hier beispielhaft einige mit den Bezugszeichen 10, 52, 53, 54, 55, 56 als Fixierpunkte bezeichnet sind. Damit bildet diese Schablone als Bestandteil der Unterkonstruktion bereits die Fixierpunkte für die Oberkonstruktion ab. Mittels Lasertechnik ist hier eine optimale Projektion dieser Punkte möglich.

Mehrere Knotenpunkte 57, 58, 59, 60 zeigt Figur 7, gebildet durch horizontale Streben 26, 27 und vertikale Streben 31, 32. Diese Knotenpunkte 57, 58, 59, 60 werden zunächst durch Steckverbindungen hergestellt und dann über Befestigungsmittel, von denen hier beispielhaft einige mit den Bezugszeichen 92, 93, 94, 95 bezeichnet sind, gesichert.

Dargestellt ist dies zusätzlich in Figur 8 mit den Ausnehmungen 36', 36", 36"', 36"", 36""' und damit einer besonders guten Anpassung der horizontalen Strebe 26 und der vertikalen Strebe 31, die zunächst über die genannten Ausnehmungen miteinander verbunden und dann durch Einsatz von Befestigungsmitteln in die Bohrungen 96, 96', 96" und 96"' fixiert werden.

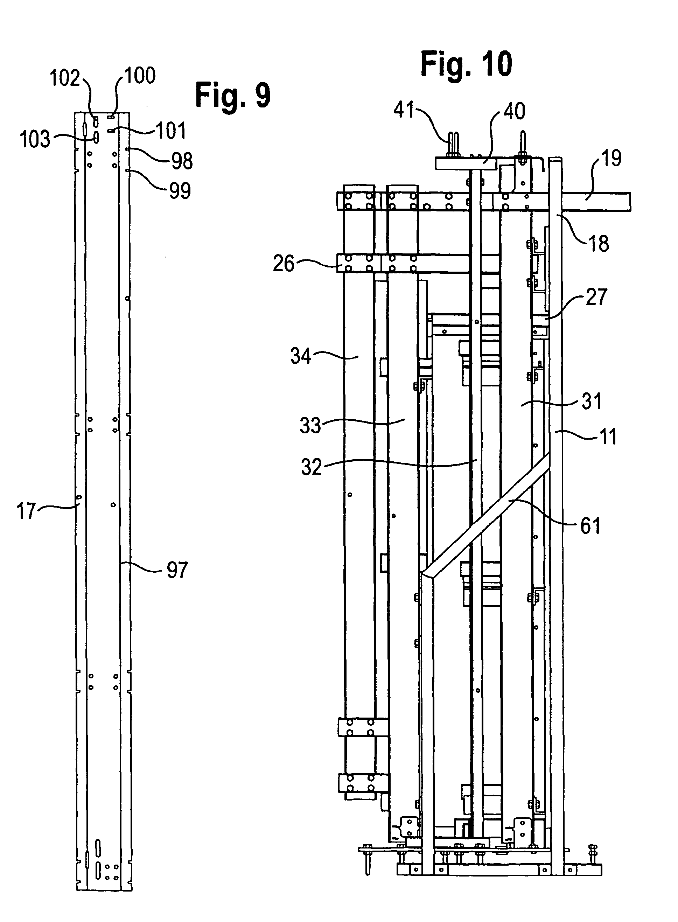

Eine Verstrebung 97 zeigt Figur 9. Schwerpunkt dieser Darstellung sind dabei einmal die Ausnehmungen 98, 99 zur Verbindung mit benachbarten Bauteilen sowie die Anschlüsse 100, 101 für eine Steckverbindung nebst Langlöchern 102, 103 zur Anpassung. Mit dem Bezugszeichen 17 ist der Meterriss bezeichnet, der zur Ausrichtung des Tragwerks in Hinblick auf die eingemessenen Daten vor Ort dient. Auch dieser Meterriss 17 ist werkseitig vorgefertigt.

Eine standardisierte Baugruppe 11 als Bestandteil der Oberkonstruktion zeigt Figur 10 mit diversen vertikalen Streben 31, 32, 33, 34 und horizontalen Streben 26, 27, zusätzlich einer Diagonalstrebe 61. Am oberen Ende 18 der Oberkonstruktion findet sich der Anschluss 19 in Form eines Querstegs, der aus der eigentlichen Verkleidung herausragt. Dieser ist Gewerke übergreifend dahingehend ausgebildet, dass er als Anschluss und als Orientierung für die hier nicht dargestellte Deckenverkleidung dient. Mit den Bezugszeichen 40 und 41 sind die Deckenleiste und die Dübel bezeichnet.

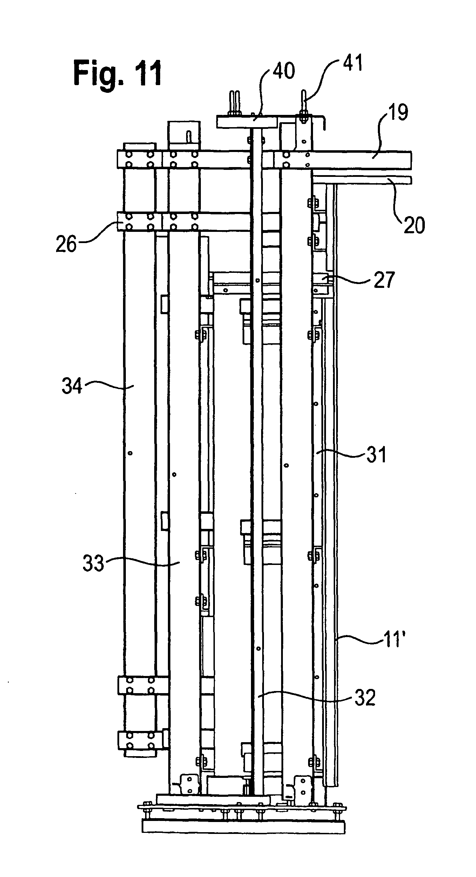

Eine andere standardisierte Baugruppe 11' zeigt Figur 11. Vertikale Streben 31, 32, 33, 34 und horizontale Streben 26, 27 - beispielhaft bezeichnet - sind miteinander verbunden. Den oberen Abschluss bildet die Deckenleiste 40, darunter ist der Anschluss 19 zu erkennen, wobei mit dem Bezugszeichen 20 eine entsprechende Deckenplatte bezeichnet ist.

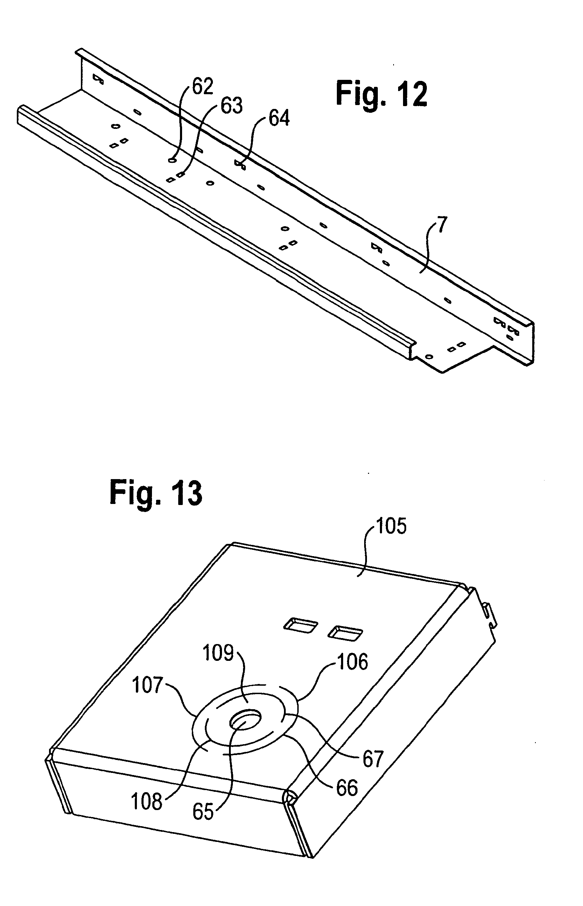

Eine Profilleiste 7 zeigt Figur 12 mit diversen Öffnungen / Bohrungen, von denen hier drei beispielhaft mit den Bezugszeichen 62, 63 und 64 bezeichnet sind. Diese dienen zum Anschluss der Oberkonstruktion bzw. zu deren Einmessung.

Ein weiteres Anschlussbauteil 105 zeigt Figur 13. Dieses weist eine Bohrung 65 auf, die von gezielten Materialschwächungen 66, 67 in Form von zueinander versetzt angeordneten Schlitzen 106, 107, 108, 109 umgeben ist. Wird ein Befestigungsmittel, beispielsweise ein Dübel in die Bohrung 65 eingesetzt, ist somit eine Anpassung auch für den Fall möglich, dass dieser nicht korrekt rechtwinklig in die Bohrung 65 eingetrieben wird.

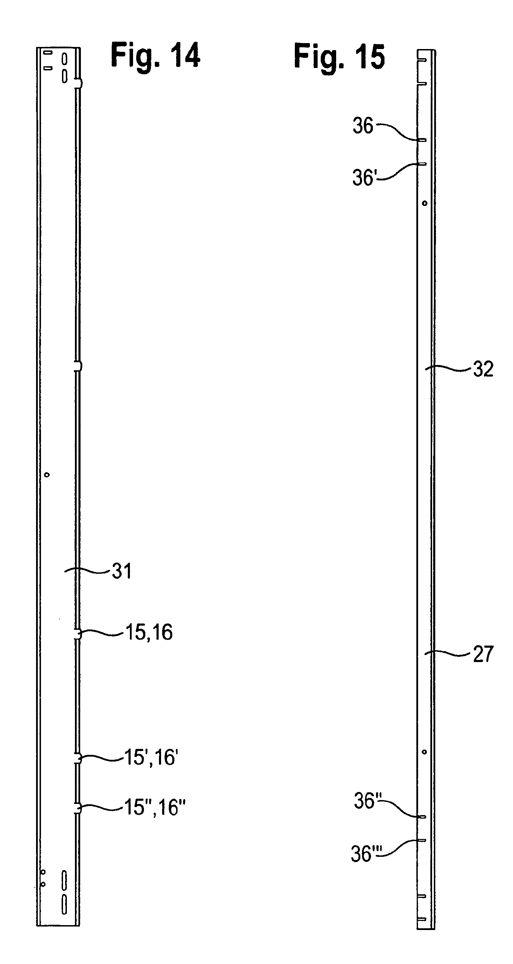

Veranschaulicht in Figur 14 ist eine Strebe 31 mit diversen Nasen 15, 15', 15" als Auflager 16, 16', 16" für horizontale Streben oder andere Bauteile. Diese Nasen sind aus dem Profil herausgelasert, sodass auch hier eine Einmessung vor Ort nicht notwendig ist.

Gleiches gilt für die Strebe 32, die in Figur 15 dargestellt ist und die Ausnehmungen 36, 36', 36" und 36"' zum Anschluss anderer Bauteile.

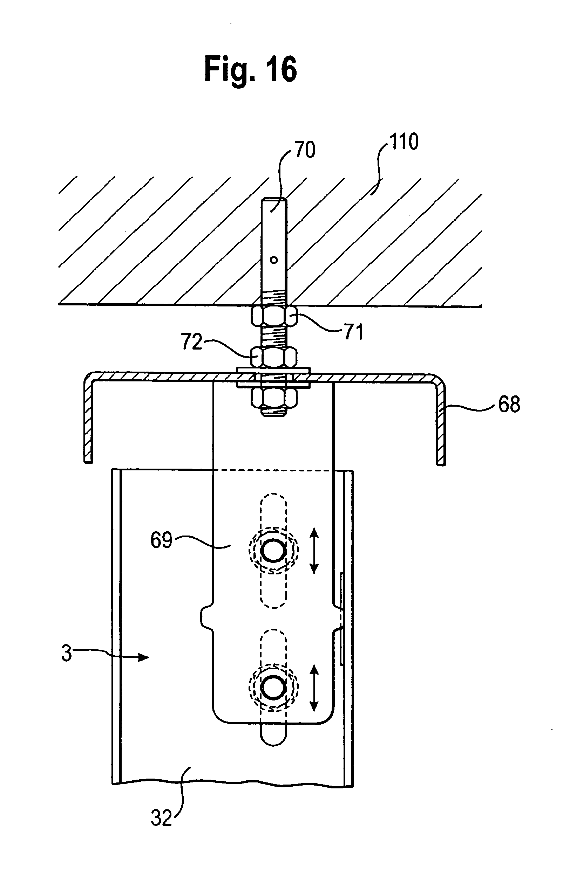

Hierzu zeigt Figur 16 den Anschluss der Oberkonstruktion 3 mittels Befestigungslasche 69 an die Betondecke 110 über den Anker 70. Über Muttern 71, 72 erfolgt hier die Fixierung des Deckenprofils 68, das dann seinerseits über die Befestigungslasche 69 mit der Oberkonstruktion 3, bzw. hier der Strebe 32 verbunden ist.

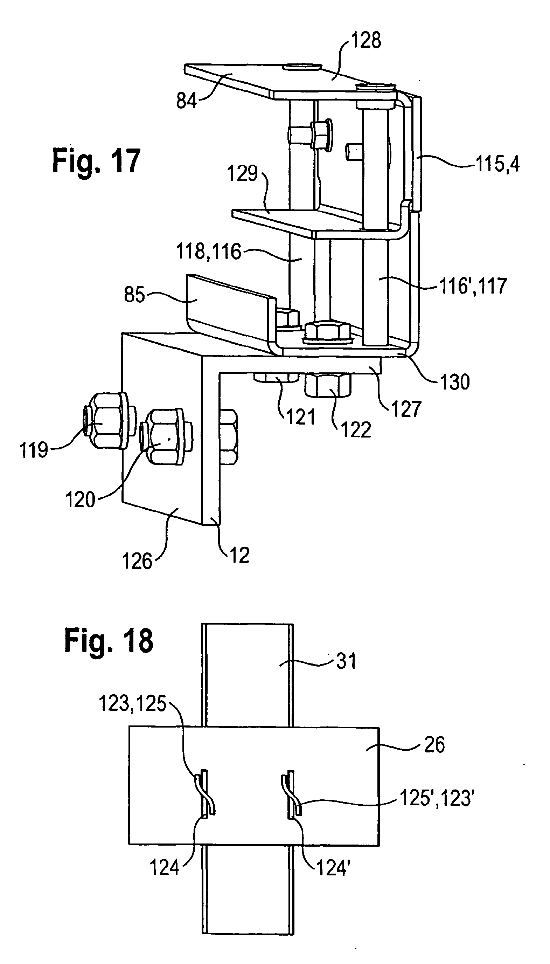

In Figur 17 ist der Anschluss eines Haltewinkels 12 an eine Wandverkleidung 4 dargestellt. Der Haltewinkel 12 wird seinerseits an seinem senkrechten Schenkel 120 über die beiden Befestigungsmittel 119, 120 mit dem hier ansonsten nicht dargestellten Tragwerk verbunden. Der horizontale Schenkel 127 des Haltewinkels 12 dient zur Aufnahme der Winkelplatten 84, 85 zum Anschluss der Paneele 115. Dabei ist die Winkelplatte 85 über die Befestigungsmittel 121, 122 mit dem Haltewinkel 12 verbunden. An die durch die Winkelplatten 84, 85 gebildete Konstruktion ist das die Wandverkleidung 4 bildende Paneel angehängt. Um diese Paneelen 115 zueinander perfekt ausrichten zu können, ist die durch die Schraubbolzen 117, 118 ausgebildete Justiervorrichtung 116, 116' vorgesehen. Die Schraubbolzen 117, 118 durchdringen die Platten 128, 129 und stützen sich dann auf der Platte 130 bzw. indirekt dem Haltewinkel 12 so ab, dass bei Drehung der Schraubbolzen 117, 118 durch entsprechenden Druck auf die Platte 130 eine Nachjustierung auf denkbar einfache wie exakte Weise möglich ist.

Schließlich zeigt Figur 18 einen beliebigen Knotenpunkt zwischen einer horizontalen Strebe 26 und einer vertikalen Strebe 31. Beide besitzen in der Darstellung gemäß Figur 18 ein C-förmiges Profil und sind ineinander gesteckt, wie es z. B. in Figur 8 veranschaulicht ist. Diese Steckverbindung ist zusätzlich mit einer Sicherung 123, 123' versehen. Dabei handelt es sich um zwei schlitzförmige Öffnungen 124, 124' in der horizontalen Strebe 26 und zwei Verklinkungen 125, 125', welche beim Zusammensetzen der Streben 26, 31 durch die Öffnungen durchgeschoben werden. Anschließend erfolgt die in Figur 18 veranschaulichte Verdrehung dieser beiden Verklinkungen 125, 125', die entsprechend mit einem vergleichsweise dünnen Steg mit dem eigentlichen Profil verbunden sind. Durch diese Sicherung 123 ist zusätzlich eine Auseinanderbewegung der Streben 26, 31 ausgeschlossen.

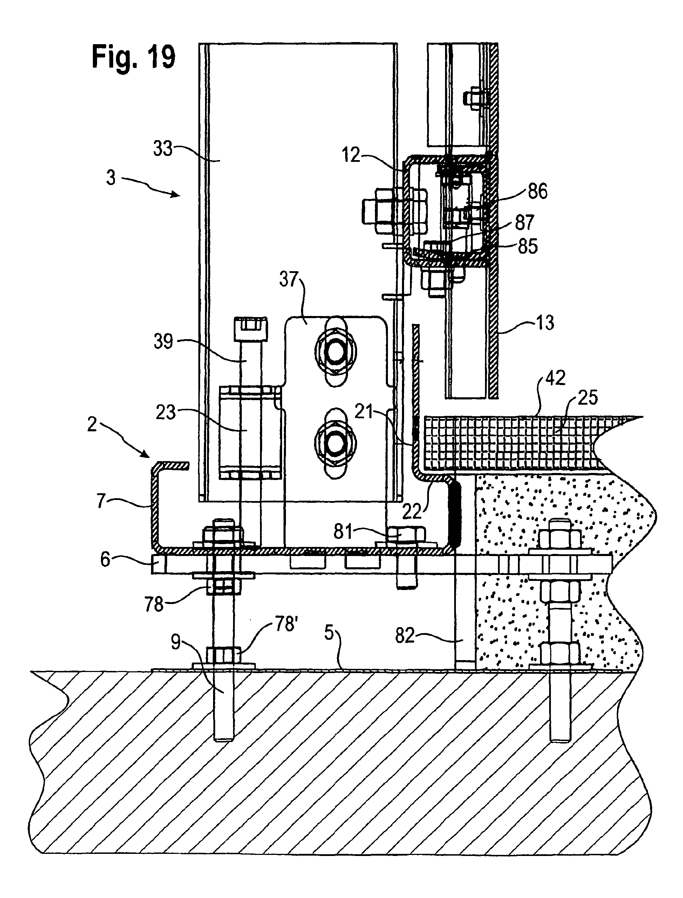

Figur 19 zeigt eine Variante der in Figur 3 dargestellten Unterkonstniktion 2 und den daran angeschlossenen, unteren Teil der Oberkonstruktion 3. Wie in der Fig. 19 dargestellt, ist das Winkelprofil 7 im Bereich des unteren Endes 21 der Oberkonstruktion 3 mit im wesentlichen rechtwinkligen Biegungen ausgestalltet, so dass der Absatz 22 durch die Biegungen des Winkelprofils 7 ausgebildet ist.

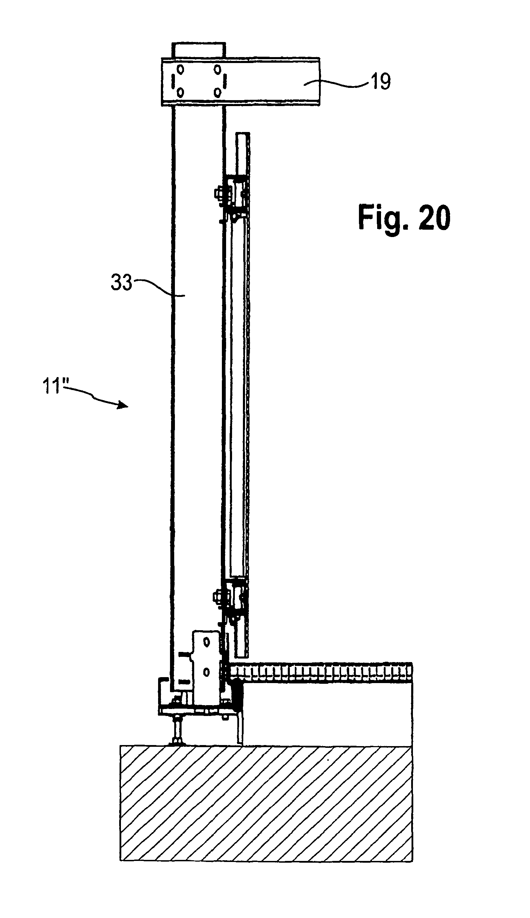

Figur 20 zeigt eine weitere standardisierte Baugruppe 11 " mit einer vertikalen Strebe 33. Am oberen Ende der Oberkonstruktion findet sich der Anschluss 19 in Form eines Querstegs, der aus der eigentlichen Verkleidung herausragt.

## Patentansprüche

1. Innenausbau für Geschäftsräume, mit einem aus einer Unterkonstruktion (2) und einer Oberkonstruktion (3) gebildeten Tragwerk (1) und einer Wandverkleidung (4),
**gekennzeichnet durch**
eine Unterkonstruktion (2), bestehend aus einer Verankerung (9) in dem Betonboden (8), eine auf dem Betonboden (8) positionierte, Maßvorgaben für die Oberkonstruktion (3) aufweisende Schablone (5), eine beabstandet zu der Schablone (5) angeordnete Bodenplatte (6) und ein auf der Bodenplatte (6) fixiertes Winkelprofil (7) zum Anschluss der Oberkonstruktion (3),
wobei die Oberkonstruktion (3) des Tragwerks (1) **durch** eine Vielzahl miteinander verbundener, horizontal angeordneter Streben (26-30) und vertikal angeordneter Streben (31-35) gebildet ist,
das Winkelprofil (7) und eine der Streben **durch** eine Anschlusslasche (37) miteinander verbunden sind, welche einen fixen Auflagerpunkt für die Strebe aufweist, und
die Anschlusslasche (37) mit einer Vorrichtung (23) zur Feinjustierung ausgerüstet ist.

2. Innenausbau nach Anspruch 1, **dadurch gekennzeichnet, dass** die Schablone (5) Öffnungen (10) aufweist, welche vertikalen Bezugspunkten für die Oberkonstruktion (3) entsprechen.

3. Innenausbau nach Anspruch 1, **dadurch gekennzeichnet, dass** die Schablone (5) aus Feinblech, vorzugsweise aus einem ca.1 mm starken Feinblech hergestellt ist.

4. Innenausbau nach Anspruch 1, **dadurch gekennzeichnet, dass** die Bodenplatte (6) zur Vorjustierung der Oberkonstruktion (3) dient.

5. Innenausbau nach Anspruch 1, **dadurch gekennzeichnet, dass** das Winkelprofil (7) einen C-förmigen Querschnitt aufweist.

6. Innenausbau nach Anspruch 1, **dadurch gekennzeichnet, dass** die Oberkonstruktion (3) durch mindestens eine standardisierte Baugruppe (11) gebildet ist.

7. Innenausbau nach Anspruch 1, **dadurch gekennzeichnet, dass** an der Oberkonstruktion (3) Haltewinkel (12) zur Fixierung der Wandverkleidung (4) vorgesehen sind.

8. Innenausbau nach Anspruch 7, **dadurch gekennzeichnet, dass** zwischen den Haltewinkeln (12) und den die Wandverkleidung (4) bildenden Paneelen (115) Justiervorrichtungen (116) vorgesehen sind.

9. Innenausbau nach Anspruch 8, **dadurch gekennzeichnet, dass** die Justiervorrichtungen (116) durch Schraubbolzen (118) gebildet sind, welche zwischen den Haltewinkeln (12) und den Paneelen (115) positioniert sind.

10. Innenausbau nach Anspruch 1, **dadurch gekennzeichnet, dass** die Oberkonstruktion (3) aus ihrem Profil (14) herausstehende Nasen (15) aufweist, welche als Auflager (16) für den Anschluss anderer Bauelemente dienen.

11. Innenausbau nach Anspruch 10, **dadurch gekennzeichnet, dass** die Nasen (15) aus dem Profil (14) der Oberkonstruktion (3) herausgelasert sind.

12. Innenausbau nach Anspruch 1, **dadurch gekennzeichnet, dass** die Oberkonstruktion (3) mindestens einen Meterriss (17) aufweist.

13. Innenausbau nach Anspruch 1, **dadurch gekennzeichnet, dass** die Oberkonstruktion (3) an ihrem oberen Ende (18) parallel zum Boden (8) verlaufende Anschlüsse (19) für die Deckenverkleidung (20) aufweist.

14. Innenausbau nach Anspruch 1, **dadurch gekennzeichnet, dass** die Oberkonstruktion (3) an ihrem unteren Ende (21) mindestens einen Absatz (22) aufweist, der als Bezug für den Estrich (44) dient.

15. Innenausbau nach Anspruch 1, **dadurch gekennzeichnet, dass** die Oberkonstruktion (3) an ihrem unteren Ende (21) mindestens eine Markierung (24) aufweist, die als Bezug für den Bodenbelag (25) dient.

16. Innenausbau nach Anspruch 15, **dadurch gekennzeichnet, dass** die horizontal angeordneten Streben (26-30) und die vertikal angeordneten Streben (31-35) formschlüssig miteinander verbunden sind.

17. Innenausbau nach Anspruch 16, **dadurch gekennzeichnet, dass** die horizontal angeordneten Streben (26-30) und die vertikal angeordneten Streben (31-35) zueinander korrespondierende Ausnehmungen (36) aufweisen.

18. Innenausbau nach Anspruch 1, **dadurch gekennzeichnet, dass** die Verbindung zwischen horizontal angeordneten Streben (26-30) und vertikal angeordneten Streben (31-35) mit einer Sicherung (123) versehen ist.

19. Innenausbau nach Anspruch 18, **dadurch gekennzeichnet, dass** die Sicherung (123) durch eine Öffnung (124) in einer Strebe (26) und eine an der benachbarten Strebe (31) korrespondierend zu der Öffnung (124) ausgebildete Verklinkung (125) gebildet ist.

20. Innenausbau nach Anspruch 1, **dadurch gekennzeichnet, dass** Verbindungspunkte um Bohrungen (65) herum Materialschwächungen (66, 67) aufweisen.

21. Verfahren zur Installation eines Innenausbaus für Geschäftsräume, mit einem aus einer Unterkonstruktion (2) und einer Oberkonstruktion (3) gebildeten Tragwerk (1) und einer Wandverkleidung (4),
**dadurch gekennzeichnet,**
**dass** zunächst eine Unterkonstruktion (2) hergestellt wird, bestehend aus einer Verankerung (9) in dem Betonboden (8), einer auf dem Betonboden (8) positionierten, Maßvorgaben für die Oberkonstruktion (3) aufweisenden Schablone (5), einer beabstandet zu der Schablone (5) angeordneten Bodenplatte (6) und einem auf der Bodenplatte (6) fixierten Winkelprofil (7), über das anschließend die Oberkonstruktion (3) angeschlossen wird,
wobei die Oberkonstruktion (3) des Tragwerks (1) durch eine Vielzahl miteinander verbundener, horizontal angeordneter Streben (26-30) und vertikal angeordneter Streben (31-35) gebildet ist,
das Winkelprofil (7) und eine der Streben durch eine Anschlusslasche (37) miteinander verbunden sind, welche einen fixen Auflagerpunkt für die Strebe aufweist, und
die Anschlusslasche (37) mit einer Vorrichtung (23) zur Feinjustierung ausgerüstet ist.

## Claims

1. Interior fitting for business premises with a supporting framework (1) composed of a bottom structure (2) and a top structure (3), and a wall cladding (4),
**characterized by**
a bottom structure (2) consisting of an anchorage (9) in the concrete floor (8), a template (5) positioned on the concrete floor (8) and comprising the dimensional specifications for the top structure (3), a base plate (6) disposed spaced from the template (5), and an angle profile (7) fixed to the base plate (6) for connecting the top structure (3),
wherein the top structure (3) of the supporting framework (1) is composed of a plurality of horizontally arranged rods (26-30) and vertically arranged rods (31-35) linked with each other,
the angle profile (7) and one of the rods are linked with each other by a connecting lug (37) comprising a fixed support point for the rod, and
the connecting lug (37) is provided with a device (23) for vernier adjustment.

2. Interior fitting according to claim 1, **characterized in that** the template (5) is provided with openings (10) corresponding to vertical reference points for the top structure (3).

3. Interior fitting according to claim 1, **characterized in that** the template (5) is made of a sheet metal, preferably of a sheet metal of about 1 mm thickness.

4. Interior fitting according to claim 1, **characterized in that** the base plate (6) serves for a pre-adjustment of the top structure (3).

5. Interior fitting according to claim 1, **characterized in that** the angle profile (7) comprises a C-shaped cross section.

6. Interior fitting according to claim 1, **characterized in that** the top structure (3) is formed by at least one standardized assembly group (11).

7. Interior fitting according to claim 1, **characterized in that** angle brackets (12) are provided at the top structure (3) for fixing the wall cladding (4).

8. Interior fitting according to claim 7, **characterized in that** adjustment devices (116) are provided between the angle brackets (12) and panels (115) forming the wall cladding (4).

9. Interior fitting according to claim 8, **characterized in that** the adjustment devices (116) are formed by screw bolts (118) positioned between the angle brackets (12) and the panels (115).

10. Interior fitting according to claim 1, **characterized in that** the top structure (3) comprises noses (15) protruding from its profile (14), wherein the noses (15) serve as a support (16) for connecting other construction elements.

11. Interior fitting according to claim 10, **characterized in that** the noses (15) are lasered from the profile (14) of the top structure (3).

12. Interior fitting according to claim 1, **characterized in that** the top structure (3) comprises at least one meter marking (17).

13. Interior fitting according to claim 1, **characterized in that** the top structure (3) comprises at its upper end (18) connections (19) for the sealing cladding (20) passing parallel to the floor (8).

14. Interior fitting according to claim 1, **characterized in that** the top structure (3) comprises at its lower end (21) at least one ledge (22) serving as reference for the floor screed (44).

15. Interior fitting according to claim 1, **characterized in that** the top structure (3) comprises at its lower end (21) at least one marking (24) serving as reference for the floor cover (25).

16. Interior fitting according to claim 15, **characterized in that** the horizontally arranged rods (26-30) and the vertically arranged rods (31-35) are positively linked with each other.

17. Interior fitting according to claim 16, **characterized in that** the horizontally arranged rods (26-30) and the vertically arranged rods (31-35) comprises recesses (36) corresponding to each other.

18. Interior fitting according to claim 1, **characterized in that** the link between the horizontally arranged rods (26-30) and the vertically arranged rods (31-35) are provided with a securing device (123).

19. Interior fitting according to claim 18, **characterized in that** the securing (123) is formed by an opening (124) in a rod (26) and an interlocking system (125) formed at the adjacent rod (31) corresponding to the opening (124).

20. Interior fitting according to claim 1, **characterized in that** the linking points around drilling holes (65) comprise material weaknesses (66, 67).

21. Method for installation of an interior fitting for business premises with a supporting framework (1) composed of a bottom structure (2) and a top structure (3), and a wall cladding (4), **characterized in that**
firstly, a bottom structure (2) is manufactured, consisting of an anchorage (9) in the concrete floor (8), a template (5) positioned on the concrete floor (8) and comprising dimensional specifications for the top structure (3), a base plate (6) disposed spaced from the template (5) and an angle profile (7) fixed to the base plate (6), by which subsequently the top structure (3) is connected,
wherein the top structure (3) of the framework (1) is formed by a plurality of horizontally arranged rods (26-30) and vertically arranged rods (31-35) linked with each other,
the angle profile (7) and one of the rods are linked with each other by a connection lug (37) comprising a fixed supporting point for the rod, and
the connection lug (37) is provided with a device (23) for vernier adjustment.

## Revendications

1. Revêtement intérieur pour locaux commerciaux, constitué par une ossature porteuse (1), formée d'une structure inférieure (2) et d'une structure supérieure (3), et par un habillage mural (4), **caractérisé par** une structure inférieure (2), constituée par un moyen d'ancrage (9) dans un sol en béton (8), par un gabarit (5) positionné sur le sol en béton (8) et pourvu de repères pour la structure supérieure (3), par une plaque de fond (6) disposée à distance du gabarit (5), et par une cornière (7) fixée à la plaque de fond (6) pour la liaison avec la structure supérieure (3), la structure supérieure (3) de l'ossature porteuse (1) étant formée par une pluralité de barres reliées entre elles et disposées horizontalement (26-30) et verticalement (31-35), la cornière (7) et une des barres étant reliées entre elles par une éclisse de liaison (37) comportant un point d'appui fixe pour la barre, l'éclisse de liaison (37) étant munie d'un dispositif (23) de réglage fin.

2. Revêtement intérieur selon la revendication 1, **caractérisé en ce que** le gabarit (5) comporte des ouvertures (10) correspondant à des points de référence verticaux pour la structure supérieure (3).

3. Revêtement intérieur selon la revendication 1, **caractérisé en ce que** le gabarit (5) est réalisé en tôle mince, de préférence en tôle mince d'une épaisseur d'environ 1 mm.

4. Revêtement intérieur selon la revendication 1, **caractérisé en ce que** la plaque de fond (6) sert à prérégler la structure supérieure (3).

5. Revêtement intérieur selon la revendication 1, **caractérisé en ce que** la cornière (5) possède une section transversale en forme de C.

6. Revêtement intérieur selon la revendication 1, **caractérisé en ce que** la structure supérieure (3) est formée par au moins un ensemble structurel normalisé (11).

7. Revêtement intérieur selon la revendication 1, **caractérisé en ce que** sur la structure supérieure (3) sont prévues des cornières de retenue (12) pour immobiliser l'habillage mural (4).

8. Revêtement intérieur selon la revendication 7, **caractérisé en ce qu'**entre les cornières de retenue (12) et les panneaux (115) formant l'habillage mural (4) sont prévus des dispositifs de réglage (116).

9. Revêtement intérieur selon la revendication 8, **caractérisé en ce que** les dispositifs de réglage (116) sont formés par des boulons filetés (118) qui sont disposés entre les cornières de retenue (12) et les panneaux (115).

10. Revêtement intérieur selon la revendication 1, **caractérisé en ce que** la structure supérieure (3) comporte des talons (15) qui dépassent de son profil (14) et qui servent de moyens d'appui (16) pour la liaison d'autres éléments structurels.

11. Revêtement intérieur selon la revendication 10, **caractérisé en ce que** les talons (15) sont réalisés par découpe laser dans le profil (14) de la structure supérieure (3).

12. Revêtement intérieur selon la revendication 1, **caractérisé en ce que** la structure supérieure (3) comporte au moins un trait de niveau (17).

13. Revêtement intérieur selon la revendication 1, **caractérisé en ce que**, à son extrémité supérieure (18), la structure supérieure (3) comporte des moyens de liaison (19) qui s'étendent parallèlement au sol (8) et qui sont destinés à l'habillage de plafond (20).

14. Revêtement intérieur selon la revendication 1, **caractérisé en ce qu'**à son extrémité inférieure (21), la structure supérieure (3) comporte au moins un décrochement (22) qui sert de référence pour la chape (44).

15. Revêtement intérieur selon la revendication 1, **caractérisé en ce que**, à son extrémité inférieure (21), la structure supérieure (3) comporte au moins une marque (24) qui sert de référence pour le revêtement de sol (25).

16. Revêtement intérieur selon la revendication 15, **caractérisé en ce que** les barres disposées horizontalement (26-30) et les barres disposées verticalement (31-35) sont reliées entre elles par complémentarité de formes.

17. Revêtement intérieur selon la revendication 16, **caractérisé en ce que** les barres disposées horizontalement (26-30) et les barres disposées verticalement (31-35) sont pourvues d'évidement (36) qui correspondent les uns aux autres.

18. Revêtement intérieur selon la revendication 1, **caractérisé en ce que** le moyen de liaison entre des barres disposées horizontalement (26-30) et des barres disposées verticalement (31-35) est muni d'un moyen de blocage (123).

19. Revêtement intérieur selon la revendication 18, **caractérisé en ce que** le moyen de blocage (123) est formé par une ouverture (124) ménagée dans une barre (26) et par un moyen d'encliquetage (125) qui est disposé sur la barre voisine (31) et qui correspond à l'ouverture (124).

20. Revêtement intérieur selon la revendication 1, **caractérisé en ce que** des points de liaison comportement, autour de perçages (65), des affaiblissement de matière (66, 67).

21. Procédé de pose d'un revêtement intérieur pour locaux commerciaux, comprenant une ossature porteuse (1), formée d'une structure inférieure (2) et d'une structure supérieure (3), et un habillage mural (4), **caractérisé en ce qu'**on réalise d'abord une structure inférieure (2), constituée par un moyen d'ancrage (9) dans un sol en béton (8), par un gabarit (5) positionné sur le sol en béton (8) et pourvu de repères pour la structure supérieure (3), par une plaque de fond (6) disposée à distance du gabarit (5), et par une cornière (7) fixée à la plaque de fond (6) pour la liaison avec la structure supérieure (3) et servant à relier ensuite la structure supérieure (3), la structure supérieure (3) de l'ossature porteuse (1) étant formée par une pluralité de barres reliées entre elles et disposées horizontalement (26-30) et verticalement (31-35), la cornière (7) et une des barres étant reliées entre elles par une éclisse de liaison (37) comportant un point d'appui fixe pour la barre, l'éclisse de liaison (37) étant munie d'un dispositif (23) de réglage fin.
